# EUROPÄISCHE PATENTSCHRIFT

(11) **EP 0 685 914 B1**
(45) Veröffentlichungstag und Bekanntmachung des Hinweises auf die Patenterteilung: **29.04.1998**
(21) Anmeldenummer: 95250131.0
(22) Anmeldetag: 31.05.1995
(51) Int. Cl.: H02B 11/127, H02B 11/10

(54) **Einfahrbares Schaltgerät mit einer Anzeigevorrichtung für die Stellung des Schaltgerätes**
Retractable switchgear with an indicator device for the position of the switchgear
Appareillage électrique escamotable avec un dispositif d'indication pour la position de l'appareillage

(30) Priorität: 03.06.1994 DE 4420582
(43) Veröffentlichungstag der Anmeldung: 06.12.1995
(73) Patentinhaber: SIEMENS AKTIENGESELLSCHAFT, 80333 München (DE)
(72) Erfinder: Godesa, Ludvik, D-10777 Berlin (DE); Marquardt, Ulrich, D-13435 Berlin (DE); Prietzel, Günter, D-13589 Berlin (DE)

(56) Entgegenhaltungen:
- DE-A- 3 932 770
- US-A- 3 588 398
- US-A- 5 097 382
- US-A- 5 278 722

## Beschreibung

Die Erfindung betrifft ein Schaltgerät mit einer Einrichtung zum Einfahren und Ausfahren relativ zu einem Einschubrahmen, wobei die Einrichtung eine Betriebsstellung, eine Teststellung und eine Trennstellung ermöglicht und folgende Merkmale aufweist:
- eine an dem Schaltgerät drehbar gelagerte und an der Bedienungsseite des Schaltgerätes zugängliche Gewindespindel,
- eine durch die Gewindespindel zu betätigende, sich quer zur Fahrrichtung des Schaltgerätes erstreckende und an den Enden mit je einem Kurbelarm versehene Einfahrwelle, wobei die Kurbelarme jeweils einen Kurbelzapfen zum Eingreifen in eine Ausnehmung eines Kulissenstückes des Einschubrahmens tragen,
- einen die Einrichtung mit dem Schaltgerät verbindenden Träger,
- eine an dem Träger angebrachte Anzeigevorrichtung zur Anzeige einer durch die Drehung der Einfahrwelle bestimmten Stellung des Schaltgerätes und
- eine Übertragungseinrichtung zur Umsetzung einer Drehung der Gewindespindel mittels einer auf der Gewindespindel geführten Wandermutter in eine Betätigung der Anzeigevorrichtung.

Ein Schaltgerät mit einer solchen Anzeigevorrichtung ist durch die US-A-5 097 382 bekannt geworden. Dabei dient die auf der Gewindespindel sitzende Wandermutter zum Schwenken eines Anzeigehebels. Ein mit einer Wandermutter verbundener Steuerstift wird entlang einer Kante des Anzeigehebels bewegt, der an seinem einen Ende schwenkbar gelagert ist und an seinem anderen Ende eine Anzeigefläche trägt. Durch die Bewegung der Wandermutter und des Steuerstiftes wird der Anzeigehebel entsprechend geschwenkt, so daß an seiner Anzeigefläche die Stellung des Schaltgerätes ablesbar ist.

Dadurch, daß der Anzeigehebel eine sich über den gesamten Weg der Wandermutter erstreckende Steuerkante aufweist, ist die Länge des Anzeigehebels von dem Weg der Wandermutter abhängig, der seinerseits durch das insgesamt benötigte Übersetzungsverhältnis der Einrichtung zum Verfahren des Schaltgerätes bedingt ist.

Der Erfindung liegt hiervon ausgehend die Aufgabe zugrunde, eine kompakte Anzeigevorrichtung zu schaffen, deren Abmessungen vom Weg der Wandermutter unabhängig sind.

Diese Aufgabe wird gemäß der Erfindung dadurch gelöst, daß
- die Anzeigevorrichtung eine drehbar gelagerte und an ihrem Umfang mit Markierungen für die Stellungen des Schaltgerätes relativ zu dem Einschubrahmen versehene Trommel aufweist,
- die Übertragungseinrichtung eine Feder zur Vorspannung der Trommel in der Richtung der Trennstellung und ein mit der Trommel verbundenes und an einer Umfangsfläche anliegendes biegsames Zugorgan aufweist, das mit der Wandermutter verbunden ist,
- die Trommel einen an dem Träger drehbar gelagerten Trommelkern und eine diesen abdeckende, mit Markierungen für die Stellungen des Schaltgerätes versehene Trommelglocke aufweist, wobei der Trommelkern der Übertragungseinrichtung zugeordnet ist,
- der Trommelkern und die Trommelglocke korrespondierende, in axialer Richtung wirkende Rastzähne besitzen und
- eine axial wirkende Andruckfeder zur gegenseitigen Vorspannung des Trommelkernes und der Trommelglocke vorgesehen ist.

Durch die Erfindung wird eine kompakte und nahe am bedienungsseitigen Ende der Gewindespindel anzuordnende Anzeigevorrichtung geschaffen. Durch die Übertragungseinrichtung kann jedoch die Lage der Trommel relativ zu der Gewindespindel nach Wunsch beeinflußt werden. Das Zugorgan ermöglicht nämlich sowohl einen variablen Abstand der Trommel von der Gewindespindel als auch eine variable Lage der Drehachse der Trommel.

Die Verwendung einer aus Trommelkern und Trommelglocke zusammengesetzten Trommel bietet die Möglichkeit für einen vorteilhaft einfachen Toleranzausgleich. Dieser wird dadurch bewirkt, daß die Trommelglocke in einer solchen Stellung mit dem Trommelkern gekuppelt wird, daß die Markierungen in der richtigen Zuordnung zu einen Anzeigefenster erscheinen. Die hierzu vorgesehenen in axialer Richtung wirkenden Rastzähne erleichtern dies wesentlich. Durch die Andruckfeder werden die Rastzähne in Eingriff miteinander gehalten, nachdem die gewünschte Stellung herbeigeführt worden ist.

An einer Umfangsfläche der Trommel bzw. des Trommelkernes können Indexöffungen angeordnet und am Träger kann ein mit einer Rastzunge versehener Indexschieber relativ zu der Trommel verschiebbar geführt sein, wobei der Indexschieber durch eine Feder in Richtung auf Trommel vorgespannt ist und eine Anschlagfläche zur Beaufschlagung durch ein zur Betätigung der Gewindespindel vorgesehenes Werkzeug aufweist, um die Rastzunge außer Eingriff mit der jeweiligen Indexöffnung zu bringen. Der Indexschieber erweist sich als nützliches Hilfsmittel zur Steuerung der Funktionen eines einschiebbaren Schaltgerätes. Beispielsweise kann die Verschiebung des Indexschiebers beim Aufstecken einer Handkurbel auf die Gewindespindel dazu ausgenutzt werden, das Schaltgerät auszulösen, falls es sich im eingeschalteten Zustand befindet. Eine weitere Verwendung des Indexschiebers kann darin bestehen, ein gesondertes Verschlußorgan zu steuern, welches dem bedienungsseitigen Kopfstück der Gewindespindel vorgelagert ist.

Nach einer Weiterbildung der Erfindung kann durch eine einfache Zusatzeinrichtung unerwünschte Betätigung der Gewindespindel verhindert werden. Dies kann dadurch geschehen, daß an dem Träger ein Sperrhebel schwenkbar gelagert ist, der eine Arbeitsfläche zum Zusammenwirken mit einer Gegenfläche des Indexschiebers besitzt und daß der Sperrhebel in Abhängigkeit von der Verriegelungsbedingung blockierbar ist. Eine solche Verriegelungsbedingung kann z. B. eine geöffnete Tür der Schaltzelle oder eine Sperrung durch ein Vorhängeschloß sein.

Wie bereits erwähnt, kann ein gesondertes Verschlußorgan vorgesehen sein, daß der Gewindespindel vorgelagert ist. Dieses Verschlußorgan kann quer zur Richtung der Bewegung des Indexschiebers verschiebbar geführt sein und kann eine derart mit dem Indexschieber zusammenwirkende Sperrnase besitzen, daß das Verschlußorgan nur in den Raststellungen des Indexschiebers betätigbar ist.

Die zu der Anzeigevorrichtung gehörende Trommel bietet eine vorteilhafte Möglichkeit, die Stellung des Schaltgerätes in dem zugehörigen Einschubrahmen auch elektrisch zu signalisieren. Hierzu kann die Trommel bzw. die Trommelglocke an ihrem Umfang wenigstens einen Nocken zu Betätigung eines Meldeschalters aufweisen.

Die Erfindung wird im folgenden anhand des in den Figuren dargestellten Ausführungsbeispieles näher erläutert.

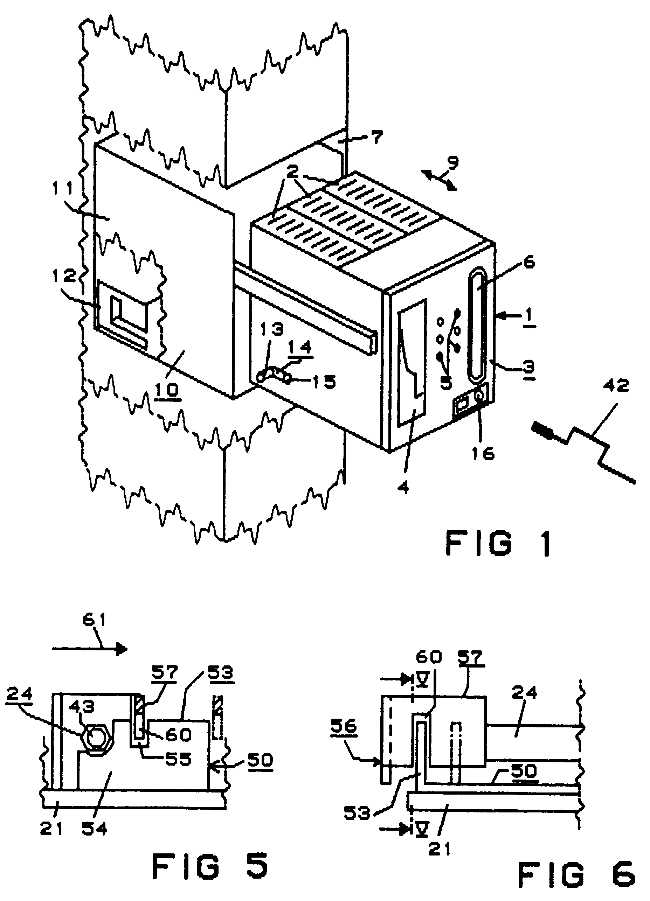

Die Figur 1 zeigt schematisch einen Niederspannungs-Leistungsschalter in Verbindung mit einer Schaltzelle und einem darin angeordneten Einschubrahmen.

Eine Einrichtung zum Einfahren und Ausfahren des Schaltgerätes mit einer Anzeigevorrichtung für die Stellung des Schaltgerätes in seinem Einschubrahmen ist in der Figur 2 in der Draufsicht und in der Figur 3 in einer Seitenansicht gezeigt. Eine Frontansicht der Einrichtung mit teilweise geschnitten dargestellten Anzeigevorrichtung zeigt die Figur 4.

Ein Indexschieber und ein Verschlußorgan sind in der Figur 5 in einer Stirnansicht und in der Figur 6 in einer Seitenansicht gezeigt.

In der Figur 1 ist als Schaltgerät 1 ein Niederspannungs-Leistungsschalter mit Lichtbogenlöschkammern 2 und einem Bedienungspult 3 gezeigt. An dem Bedienungspult ist links ein elektronischer Überstromauslöser 4 und rechts ein Handhebel 6 zu Spannen eines Federspeichers gezeigt, während Bedienungs- und Anzeigeelemente 5 zur Betätigung des Schaltgerätes 1 in der Mitte angeordnet sind. Eine Schaltzelle 7 ist Bestandteil eines Schaltschrankes oder einer mehrfeldrigen Schaltanlage und enthält einen Einschubrahmen 10, in den das Schaltgerät 1 einsetzbar ist. Seitenwände 11 des Einschubrahmens 10 sind mit einem Kulissenstück 12 versehen, in das ein Kurbelzapfen 13 eines Kurbelarmes 14 eingreift, der durch eine Einfahrwelle 15 schwenkbar ist. Eine Öffnung 16 im Bedienungspult 3 dient zum Einstecken eines Werkzeuges 42 zum Ein- und Ausfahren in der Richtung des Doppelpfeiles 9.

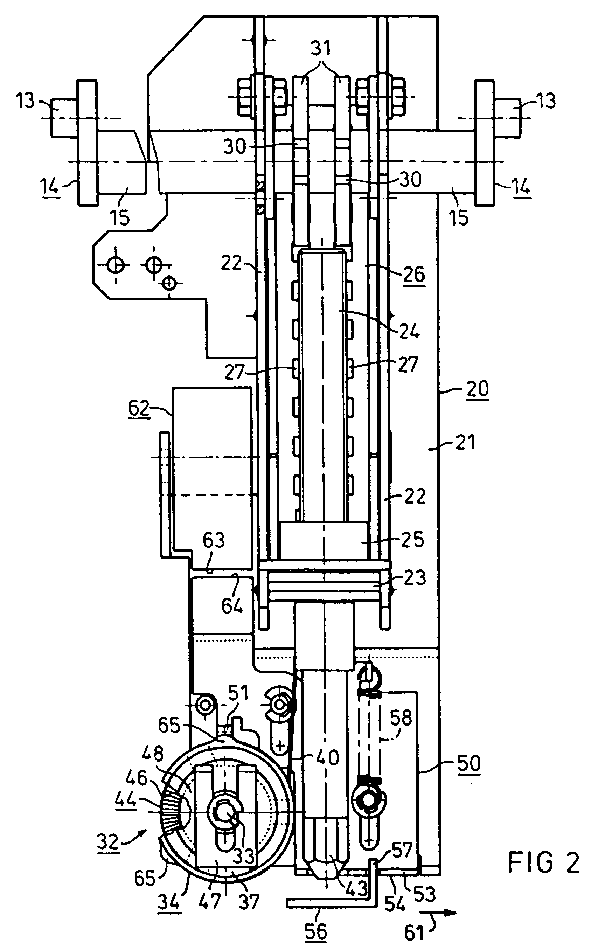

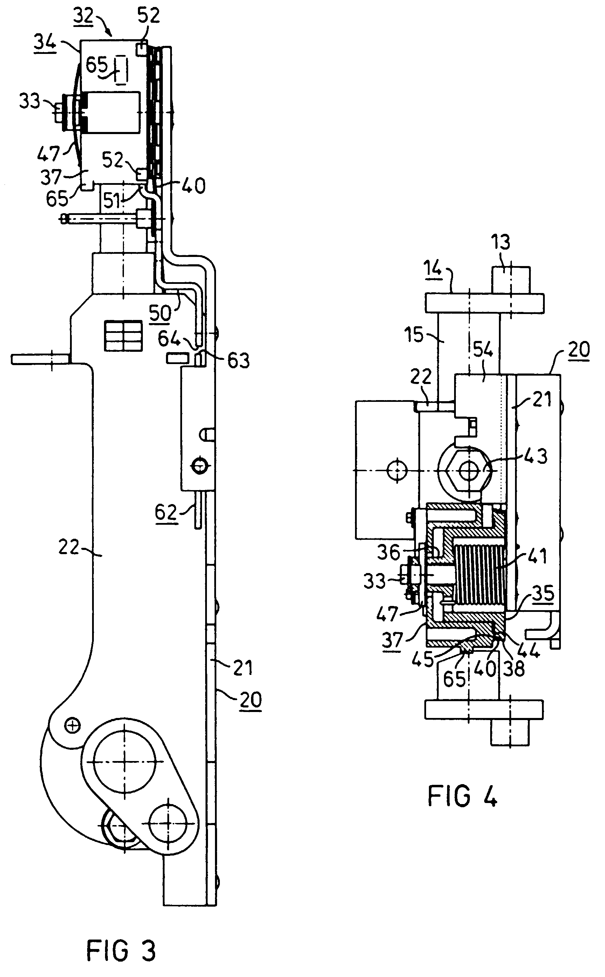

Die Einfahrwelle 15 mit dem Kurbelarm 14 und dem Kurbelzapfen 13 sind Bestandteil einer Einrichtung zum Einfahren und Ausfahren des Schaltgerätes 1, die näher in den Figuren 2 und 3 gezeigt ist. Die Einrichtung umfaßt einen als Ganzes mit 20 bezeichneten Träger, der eine Grundplatte 21 sowie zwei rechtwinklig auf diesem stehende Seitenwände 22 umfaßt. Mittels eines mit den Seitenwänden 22 verbundenen Stützlagers 23 ist eine Gewindespindel 24 gegen axiale Verschiebung gesichert. Eine auf der Gewindespindel 24 geführte Wandermutter 25 ist mit einer Zahnstange 26 verbunden, die Löcher 27 zum Eingriff von Zähnen 30 von zwei Zahnrädern 31 besitzt, die auf der Einfahrwelle 15 befestigt sind. An den Enden der Einfahrwelle 15 befinden sich die bereits anhand der Figur 1 erläuterten Kurbelzapfen 13 und Kurbelarme 14.

Auf dem Träger 20 ist ferner eine als Ganzes mit 32 bezeichnete Anzeigevorrichtung für die Stellung des Schaltgerätes 1 in seinem Einschubrahmen 10 (Figur 1) untergebracht. Der Aufbau der Anzeigevorrichtung 32 wird im folgenden anhand der Figuren 2, 3 und 4 erklärt.

Eine Grundplatte 21 des Trägers 20 ist mit einem feststehenden Lagerbolzen 33 versehen, auf dem eine zusammengesetzte Trommel 34 drehbar gelagert ist. Bestandteile der Trommel 34 sind ein Trommelkern 35 mit einem Nabenteil 36 sowie eine den Trommelkern 35 konzentrisch übergreifende Trommelglocke 37. Wie insbesondere der Figur 3 zu entnehmen ist, besitzt der Trommelkern 35 eine Umfangsfläche 38, an dem ein als Drahtseil ausgebildetes biegsames Zugorgan 40 anliegt. Das andere Ende des biegsamen Zugorgans 40 ist mit der Wandermutter 25 verbunden. Eine Biegefeder 41 umgibt den Lagerbolzen 33 und spannt den Trommelkern 35 im Uhrzeigersinn derart vor, daß das biegsame Übertragungsorgan 40 ständig gespannt ist. Ausgehend von der in der Figur 2 gezeigten Stellung der Teile kann daher beim Drehen der Gewindespindel 24 durch Aufsetzen des Werkzeuges 42 (Figur 1) auf ein stirnseitiges Kopfstück 43 der Gewindespindel 24 durch Verschiebung der Wandermutter 25 die Einfahrwelle 15 gedreht und gleichzeitig der Trommelkern 35 entgegen dem Uhrzeigersinn gedreht werden. Dem Benutzer werden hierdurch am Umfang der Trommelglocke 37 Markierungen dargeboten. Beispielsweise kann die Betriebsstellung des Schaltgerätes 1 mit C (Connected), die Prüf- oder Teststellung mit T und die Trennstellung mit D (Disconnected) bezeichnet sein.

Die Trommelglocke 37 steht mit dem Trommelkern 35 über eine Rastverzahnung in Verbindung, die an axial gegenüberstehenden Ringflächen 44 und 45 angebracht ist. Einzelne Rastzähne 46 sind in einem aufgebrochen dargestellten Bereich der Trommel 34 in der Figur 2 sichtbar. Der Nabenteil 36 des Trommelkerns 35 ist mit einer Nut versehen, in die eine als geschlitzte Blattfeder ausgebildete Andruckfeder 47 eingeschoben ist. Schenkelenden der Andruckfeder 47 liegen auf einer Bodenfläche 48 der Trommelglocke 37 auf, wodurch der Trommelkern 35 und die Trommelglocke 37 axial gegeneinander vorgespannt werden, um die Rastverzahnung an den Ringflächen 44 und 45 im Eingriff zu halten.

Auf der Grundplatte 21 aufliegend ist ein in Richtung der Längsachse der Gewindespindel 24 verschiebbar geführter Indexschieber 50 angeordnet, der eine mit der Trommel 34 zusammenwirkende Rastzunge 51 besitzt. Für das Zusammenwirken mit der Rastzunge 51 sind am Umfang der Trommelglocke 37 Indexöffnungen 52 vorgesehen, die durch Unterbrechungen der Ringfläche 44 der Trommelglocke 37 gebildet sind. Der Indexschieber 50 besitzt ferner eine frontseitige Abwinklung 53, durch welche eine Anschlagfläche 54 für das in der Figur 1 angedeutete Werkzeug 42 gebildet wird. Wie man erkennt, ist die Abwinklung 53 dem Kopfstück 43 der Gewindespindel 24 derart zugeordnet, daß das Werkzeug 42 gegen die Anschlagfläche 54 stößt, wenn das Werkzeug 42 mit dem Kopfstück 43 in Eingriff gebracht werden soll. Hierdurch wird der Indexschieber 50 soweit verschoben, daß die Rastzunge 51 aus der Ausnehmung 52 austritt. Eine Rückstellfeder 58 spannt den Indexschieber in Richtung der Trommel 34 vor.

Der Indexschieber 50 ist im Bereich seiner Abwinklung 53 mit einer Ausnehmung 55 versehen (Figur 5), die mit einem in der Figur 2 gezeigten Verschlußorgan 56 zusammenwirkt. Dieses ist in geeigneter Weise etwa parallel zu der Abwinklung 53 verschiebbar geführt und besitzt einen die Abwinklung 53 übergreifenden Sperrarm 57. Wie näher den Figuren 5 und 6 zu entnehmen ist, ist der Sperrarm 57 gleichfalls mit einer Ausnehmung 60 derart versehen, daß das Verschlußorgan 56 in Richtung eines in den Figuren 2 und 5 gezeigten Pfeiles 61 verschoben und damit das Kopfstück 43 der Gewindespindel 24 zugänglich gemacht werden kann. Auch ist nun durch das Werkzeug nach Verschieben des Indexschiebers 50 die Gewindespindel 24 zu betätigen. Wird jedoch das Werkzeug in einer Zwischenstellung des Schaltgerätes 1 abgezogen, so kehrt der Indexschieber 50 nicht in seine Ausgangsstellung zurück, weil die Rastzunge 51 am Umfang der Trommelglocke 37 anliegt, statt in eine der Ausnehmungen 52 einzutreten. Dies entspricht der in der Figur 6 gezeigten strichpunktierten Stellung des Indexschiebers 50. Das Verschlußorgan 56 kann nun nicht in die Verschlußstellung zurückbewegt werden, weil der Sperrarm 57 gegen die rechte Kante der Abwinklung 53 des Indexschiebers 50 stößt. Dem Benutzer wird damit die unvollständige bzw. fehlerhafte Handlung zur Kenntnis gebracht. Zugleich kann das Einschalten des Schaltgerätes 1 verhindert werden, wenn die Stellung des Verschlußorgans 56 in geeigneter Weise mit dem Betätigungssystem des Schaltgerätes 1 verknüpft ist.

Durch ein an dem Träger 20 bzw. dessen Grundplatte 21 anzubringendes Zusatzteil kann der Indexschieber 50 gegen Verschiebung gesperrt werden, wenn eine Verriegelungsbedingung einer Betätigung der Gewindespindel 24 entgegensteht. Hierzu ist ein Sperrhebel 62 vorgesehen, der derart schwenkbar ist, daß eine Sperrfläche 63 einer Gegenfläche 64 des Indexschiebers 50 gegenübersteht. Die Verriegelungsbedingung kann z. B. ein willkürlicher Verschluß des Fahrantriebes mittels eines Vorhängeschlosses sein oder eine selbsttätige Abhängigkeit, insbesondere eine offenstehende Tür der Schaltzelle 7 (Figur 1). In diesem Fall genügt eine einfach herzustellende mechanische Verbindung zwischen der Tür und dem Sperrhebel 62, um diesen zu betätigen, wenn die Tür geöffnet wird. Beispielsweise kann der Sperrhebel 62 in seine Sperrstellung vorgespannt sein, so daß er bei der Wegnahme der Gegenkraft durch Öffnen der Tür unmittelbar wirksam wird.

Wie schon erwähnt, dient die Mantelfläche der Trommelglocke 37 zur Anbringung von Markierungen, die dem Benutzer die jeweilige Stellung des Schaltgerätes 1 in seinem Einschubrahmen 10 anzeigen. Gleichfalls an der Mantelfläche sind zwei Steuernocken 65 angeordnet, die mit zwei übereinander angeordneten Meldeschaltern zusammenwirken (nicht gezeigt). Die Stellung des Schaltgerätes 1 kann daher auch durch ein elektrisches Signal kenntlich gemacht oder weitergeleitet und ausgewertet werden.

## Patentansprüche

1. Schaltgerät (1) mit einer Einrichtung zum Einfahren und Ausfahren relativ zu einem Einschubrahmen (10), wobei die Einrichtung eine Betriebsstellung, eine Teststellung und eine Trennstellung ermöglicht und folgende Merkmale aufweist:
- eine an dem Schaltgerät (1) drehbar gelagerte und an der Bedienungsseite des Schaltgerätes (1) zugängliche Gewindespindel (24),
- eine durch die Gewindespindel (24) zu betätigende, sich quer zur Fahrrichtung (9) des Schaltgerätes (1) erstreckende und an den Enden mit je einem Kurbelarm (14) versehene Einfahrwelle (15), wobei die Kurbelarme (14) jeweils einen Kurbelzapfen (13) zum Eingreifen in eine Ausnehmung eines Kulissenstückes (12) des Einschubrahmens (10) tragen,
- einen die Einrichtung mit dem Schaltgerät (1) verbindenden Träger (20),
- eine an dem Träger (20) angebrachte Anzeigevorrichtung (32) zur Anzeige einer durch die Drehung der Einfahrwelle (15) bestimmten Stellung des Schaltgerätes (1) und
- eine Übertragungseinrichtung zur Umsetzung einer Drehung der Gewindespindel (24) mittels einer auf der Gewindespindel (24) geführten Wandermutter (25) in eine Betätigung der Anzeigevorrichtung (32),
**gekennzeichnet durch** folgende Merkmale:
- die Anzeigevorrichtung (32) weist eine drehbar gelagerte und an ihrem Umfang mit Markierungen für die Stellungen des Schaltgerätes (1) relativ zu dem Einschubrahmen (10) versehene Trommel (34) auf,
- die Übertragungseinrichtung weist eine Feder (41) zur Vorspannung der Trommel (34) in der Richtung der Trennstellung und ein mit der Trommel (34) verbundenes und an einer Umfangsfläche (38) anliegendes biegsames Zugorgan (40) auf, das mit der Wandermutter (25) verbunden ist,
- die Trommel (34) weist einen an dem Träger (20) drehbar gelagerten Trommelkern (35) und eine diesen abdeckende, mit Markierungen für die Stellungen des Schaltgerätes (1) versehene Trommelglocke (37) auf, wobei der Trommelkern (35) der Übertragungseinrichtung zugeordnet ist,
- der Trommelkern (35) und die Trommelglocke (37) besitzen korrespondierende, in axialer Richtung wirkende Rastzähne (46) und
- eine axial wirkende Andruckfeder (47) ist zur gegenseitigen Vorspannung des Trommelkernes (35) und der Trommelglocke (37) vorgesehen.

2. Schaltgerät nach einem der Ansprüche 1,
**dadurch gekennzeichnet,** daß an einer Umfangsfläche (38) der Trommel (34) bzw. der Trommelglocke (37) Indexöffnungen (52) angeordnet und an dem Träger (20) ein mit einer Rastzunge (51) versehener Indexschieber (50) relativ zu der Trommel (34) verschiebbar geführt ist, wobei der Indexschieber (50) durch eine Rückstellfeder (58) in Richtung auf die Trommel (34) vorgespannt ist und eine Anschlagfläche (54) zur Beaufschlagung durch ein zur Betätigung der Gewindespindel (24) vorgesehenes Werkzeug (42) aufweist, um die Rastzunge (51) außer Eingriff mit der jeweiligen Indexöffnung (52) zu bringen.

3. Schaltgerät nach Anspruch 2,
**dadurch gekennzeichnet,** daß an dem Träger (20) ein Sperrhebel (62) schwenkbar gelagert ist, der eine Sperrfläche (63) zum Zusammenwirken mit einer Gegenfläche (64) des Indexschiebers (50) besitzt und daß der Sperrhebel (62) in Abhängigkeit von einer Verriegelungsbedingung blockierbar ist.

4. Schaltgerät nach Anspruch 2,
**dadurch gekennzeichnet,** daß der Gewindespindel (24) ein Verschlußorgan (56) vorgelagert ist, das quer zur Richtung der Bewegung des Indexschiebers (50) verschiebbar geführt ist und das eine derart mit dem Indexschieber (50) zusammenwirkende Sperrnase (57) besitzt, daß das Verschlußorgan (56) nur in den Raststellungen des Indexschiebers (50) betätigbar ist.

5. Schaltgerät nach einem der vorangehenden Ansprüche,
**dadurch gekennzeichnet,** daß die Trommel (34) bzw. die Trommelglocke (37) an ihrem Umfang wenigstens einen Nocken (65) zur Betätigung eines Meldeschalters aufweist.

## Claims

1. Switching device (1) having a device for retraction and extension relative to a rack frame (10), the device allowing an operating position, a test position and a disconnected position and having the following features:
- a threaded spindle (24) which is mounted on the switching device (1) such that it can rotate and is accessible on the control side of the switching device (1),
- a retraction shaft (15) which can be operated by the threaded spindle (24), extends transversely with respect to the direction of motion (9) of the switching device (1) and is provided with a crank arm (14) at each end, the crank arms (14) each being fitted with a crankpin (13) for engaging in a recess in a slotted link (12) in the rack frame (10),
- a mount (20) which connects the device to the switching device (1),
- an indicating apparatus (32), which is fitted on the mount (20), for indicating a position of the switching device (1) governed by the rotation of the retraction shaft (15), and
- a transmission device for converting rotation of the threaded spindle (24) by means of a travelling nut (25), which is carried on the threaded spindle (24), into operation of the indicating apparatus (32),
characterized by the following features:
- the indicating apparatus (32) has a drum (34) which is mounted such that it can rotate and is provided on its circumference with markings for the positions of the switching device (1) relative to the rack frame (10),
- the transmission device has a spring (41) for prestressing the drum (34) in the direction of the disconnected position and has a flexible tensioning device (40) which is connected to the drum (34), is in contact with a circumferential surface (38) and is connected to the travelling nut (25),
- the drum (34) has a drum core (35) which is mounted on the mount (20) such that it can rotate and has a drum bell (37) which covers the drum core (35) and is provided with markings for the positions of the switching device (1), the drum core (35) being allocated to the transmission device,
- the drum core (35) and the drum bell (37) have corresponding latching teeth (46) acting in the axial direction, and
- an axially acting contact-pressure spring (47) is provided for mutually prestressing the drum core (35) and the drum bell (37).

2. Switching device according to Claim 1, characterized in that index openings (52) are arranged on a circumferential surface (38) of the drum (34) and/or of the drum bell (37), and an index slide (50), which is provided with a latching tongue (51), is guided on the mount (20) such that it can move relative to the drum (34), the index slide (50) being prestressed in the direction of the drum (34) by a restoring spring (58), and having a contact surface (54) which can be acted on by a tool (42) provided for operating the threaded spindle (24), in order to disengage the latching tongue (51) from the respective index opening (52).

3. Switching device according to Claim 2, characterized in that a locking lever (62) is mounted on the mount (20) such that it can pivot and has a locking surface (63) for interacting with a mating surface (64) on the index slide (50), and in that the locking lever (62) can be locked as a function of an interlocking condition.

4. Switching device according to Claim 2, characterized in that a closure element (56) is mounted in front of the threaded spindle (24), is guided such that it can move transversely with respect to the direction of motion of the index slide (50) and has a locking tab (57) which interacts with the index slide (50) in such a manner that the closure element (56) can be operated only when the index slide (50) is in one of the latched positions.

5. Switching device according to one of the preceding claims, characterized in that the drum (34) and/or the drum bell (37) have/has at least one stud (65) on its circumference, in order to operate a signalling switch.

## Revendications

1. Appareillage électrique (1) équipé d'un système d'escamotage et d'extraction par rapport à un châssis d'insertion (10), le système autorisant une position de fonctionnement, une position d'essai et une position de coupure, et présentant les caractéristiques suivantes :
- une broche filetée (24) montée à rotation sur l'appareillage électrique (1) et accessible du côté manoeuvre de l'appareillage électrique (1),
- un axe d'escamotage (15) pouvant être actionné par l'intermédiaire de la broche filetée (24), s'étendant transversalement par rapport à la direction de déplacement (9) de l'appareillage électrique (1) et muni d'un bras de manivelle respectif (14) aux extrémités, les bras de manivelle (14) portant chacun un maneton (13) destiné à pénétrer dans un évidement d'une pièce, formant coulisse, (12) du châssis d'insertion (10),
- un support (20) reliant le système à l'appareillage électrique (1),
- un dispositif d'indication (32), installé sur le support (20) en vue d'indiquer une position de l'appareillage électrique (1) déterminée par la rotation de l'axe d'escamotage (15), et
- un système de transmission pour convertir une rotation de la broche filetée (24) en un actionnement du dispositif d'indication (32), au moyen d'un écrou baladeur (25) guidé sur ladite broche filetée (24),
caractérisé par les particularités suivantes :
- le dispositif d'indication (32) comporte un tambour (34) monté à rotation et présentant, sur son pourtour, des repères affectés aux positions de l'appareillage électrique (1) vis-à-vis du châssis d'insertion (10),
- le système de transmission comprend un ressort (41) pour précharger le tambour (34) dans la direction de la position de coupure, et un organe souple de traction (40) qui est relié au tambour (34), est appliqué contre une surface périphérique (38) et est relié à l'écrou baladeur (25),
- le tambour (34) comprend une pièce centrale (35) montée à rotation sur le support (20), et une cloche (37) coiffant ladite pièce et dotée de repères affectés aux positions de l'appareillage électrique (1), la pièce centrale (35) du tambour étant associée au système de transmission,
- la pièce centrale (35) du tambour et la cloche (37) du tambour possèdent des dents correspondantes d'encliquetage (46), agissant dans le sens axial, et
- un ressort de pression (47), agissant dans le sens axial, est prévu pour précharger mutuellement la pièce centrale (35) du tambour et la cloche (37) du tambour.

2. Appareillage électrique selon la revendication 1,
caractérisé par le fait que des orifices de repérage (52) se trouvent, respectivement, sur une surface périphérique (38) du tambour (34) ou de la cloche (37) du tambour et un coulisseau de repérage (50), pourvu d'une languette encliquetable (51), est guidé à coulissement sur le support (20) par rapport au tambour (34), le coulisseau de repérage (50) étant préchargé en direction du tambour (34) par l'intermédiaire d'un ressort de rappel (58), et étant muni d'une surface de butée (54) en vue de la sollicitation par un outil (42) prévu pour actionner la broche filetée (24), de manière à supprimer la prise de la languette encliquetable (51) avec l'orifice de repérage (52) considéré.

3. Appareillage électrique selon la revendication 2,
caractérisé par le fait qu'un levier de blocage (62), monté à pivotement sur le support (20), possède une surface de blocage (63) destinée à coopérer avec une surface complémentaire (64) du coulisseau de repérage (50) ; et par le fait que le levier de blocage (62) peut être arrêté en fonction d'un état de verrouillage.

4. Appareillage électrique selon la revendication 2,
caractérisé par le fait qu'un organe d'obturation (56), installé en amont de la broche filetée (24), est guidé à coulissement transversalement par rapport à la direction du mouvement du coulisseau de repérage (50), et possède un bras de blocage (57) coopérant, avec le coulisseau de repérage (50), de façon telle que l'organe d'obturation (56) puisse être actionné uniquement dans les positions encliquetées du coulisseau de repérage (50).

5. Appareillage électrique selon l'une des revendications précédentes,
caractérisé par le fait que le tambour (34) ou la cloche (37) du tambour présente respectivement, sur son pourtour, au moins une came (65) en vue de l'actionnement d'un commutateur de signalisation.
